# EUROPÄISCHE PATENTSCHRIFT

(11) **EP 1 427 777 B1**
(45) Veröffentlichungstag und Bekanntmachung des Hinweises auf die Patenterteilung: **12.09.2007**
(21) Anmeldenummer: 02772247.9
(22) Anmeldetag: 30.08.2002
(51) Int. Cl.: C08K 13/06, F02M 35/10

(54) **VERWENDUNG THERMOPLASTISCHER FORMMASSEN AUF DER BASIS VON POLYAMIDEN**
USE OF POLYAMIDE-BASED THERMOPLASTIC MOLDING MATERIALS
EMPLOI DE MATIERES A MOULER THERMOPLASTIQUES A BASE DE POLYAMIDES

(30) Priorität: 06.09.2001 DE 10143818
(43) Veröffentlichungstag der Anmeldung: 16.06.2004
(73) Patentinhaber: BASF Aktiengesellschaft, 67056 Ludwigshafen (DE)
(72) Erfinder: FISCHER, Michael, 67071 Ludwigshafen (DE)
(86) Internationale Anmeldenummer: PCT/EP2002/009722
(87) Internationale Veröffentlichungsnummer: WO 2003/022918

(56) Entgegenhaltungen:
- EP-A- 0 413 258
- EP-A- 0 591 731
- EP-A- 1 088 852

## Beschreibung

Die vorliegende Erfindung betrifft die Verwendung thermoplastischer Formmassen, enthaltend
(A) ein oder mehrere Polyamide,
(B) schlichtebehandelte faserförmige Füllstoffe,
(C) geradkettige gesättigte Carbonsäuresalze mit Kettenlängen (einschließlich des endständigen Carboxylkohlenstoffatoms) von mindestens 20, bevorzugt mindestens 24 C-Atomen und
(D) Alkalimetallhalogenide und Kupfer(I)-Verbindungen, sowie gegebenenfalls
(E) einen in Polyamid löslichen Farbstoff,
(F) Schlagzähmodifier und/oder
(G) weitere Zusatzstoffe.
für die Herstellung von Kunststoffhohlkörpern, insbesondere von Saugrohrmodulen aus Kunststoff.

Saugrohrmodule aus thermoplastischen Kunststoffen, insbesondere aus faserverstärkten Polyamiden sind dem Fachmann bereits bekannt. Saugrohrmodule mit konstruktiv weniger anspruchsvollen Gestaltungselementen werden regelmäßig aus zwei oder mehreren Einzelstücken zusammengeschweißt. Etabliert hat sich hierfür das Vibrationsschweißen. Schwachstelle solcher Saugrohrmodule ist jedoch regelmäßig die Schweißnaht, da unabhängig vom eingesetzten Schweißverfahren bei glasfaserverstärkten Bauteilen die Glasfasern die Tendenz zeigen, in Richtung der aus der Fügeebene fließenden Schmelze transportiert bzw, orientiert zu werden, sodass gerade im Bereich der Schweißnaht keine oder nur ein geringer Anteil an Glasfasern vorliegt. Dementsprechend verfügen solche Saugrohrmodule über einen geringen Berstdruck. Nachteilig für einen hohen Berstdruck bei aus mehreren Kunststoffkomponenten geformten Saugrohrmodulen wirken sich auch eine nicht schweißgerechte Nahtgeometrie, z.B. aufgrund fehlender Versteifungsrippen, die üblicherweise die Biegebelastung beim Zusammendrücken mit den Formteilen auffangen sollen, des weiteren die bei spritzgegossenen Formteilen häufig beobachtete Verzugsneigung, die zu uneinheitlichen Fügeabständen führt, sowie ein falsch eingestellter Schweißdruck aus.

In der WO 99/45071 wird eine glasfaserverstärkte Polyamidmischung aus einem Polycaprolactam und einem aliphatischen Polyamidco- oder -terpolymer beschrieben, die eine sehr gute Fließfähigkeit aufweist und vibrationsgeschweißte Saugrohrmodule mit gutem Berstdruckverhalten liefert.

Über eine Mischung aus aromatischen Polyamiden mit geringen Monomerrestgehalten und aliphatischen Polyamiden gelangt man gemäß WO 99/16829 zu Formteilen, die sich besser schweißen lassen und hydrolysebeständig sind. In dieselbe Richtung geht auch die WO 95/20630.

Die WO 97/10303 offenbart, dass man mit Polyamidformmassen, die über geringe Anteile an einem Plastifiziermaterial verfügen, geschweißte Saugrohrmodule mit verbessertem Berstdruck-Verhalten erhält. Als geeignete Plastifiziermaterialen werden Polyethylenglycolether, Ethylenoxidderivate, Lactamderivate, Sulfonamide, Ester und Diole genannt.

Die WO 98/11164 spezifiziert, dass als geeignete Plastifiziermaterialien langkettige Alkylpolyester und niedrigmolekulare Polyethylenglykole besonders gut geeignet sind, um hohe Berstdrücke bei verschweißten Bauteilen sicherzustellen.

Um den Wirkungsgrad eines Verbrennungsmotors zu erhöhen und die Emission von Schadstoffen in den Abgasen zu verringern, ist man gegenwärtig bestrebt, den Verbrennungsvorgang bei möglichst hohen Temperaturen stattfinden zu lassen. Aber auch ohne diese Technik tragen Maßnahmen wie die Kompletteinkapselung des Motors aus Gründen des Schallschutzes zu einer erhöhten Temperatur im Motorraum bei. Unterstützt wird dieser Effekt auch dadurch, dass die Bauteildichte im Motorraum stetig zunimmt.

Eine erhöhte Dauertemperaturbeanspruchung ist selbstverständlich nur mit Bauteilen aus sehr temperaturbeständigen Materialien möglich, die auch im Langzeittest bestehen und kein ausgeprägtes Alterungsverhalten zeigen. Höhere Arbeitstemperaturen stellen gleichzeitig auch höhere Anforderungen an die Chemikalien- und Hydrolysebeständigkeit der verwendeten Materialien. Selbstverständlich darf unter diesen anspruchsvollen Bedingungen der Berstdruck nicht in Mitleidenschaft gezogen werden.

Schließlich werden auch an den optischen Eindruck der Bauteiloberflächen im Motorraum immer höhere Anforderungen gestellt, da nicht zuletzt auf diese Weise die Qualität der eingesetzten Bauteile dokumentiert werden soll.

Konstruktiv sehr anspruchsvolle Saugrohrmodule mit komplexen Bauteilgeometrien werden heutzutage verstärkt über die Schmelzkerntechnik hergestellt (s.a. "Schmelzkerntechnik für Saugrohre", Kunststoffe, 1993, 83 (9), S. 671 - 672). Die Schmelzkerntechnik liefert spritzgegossene Hohlkörper aus Kunststoff in einem Arbeitsgang und ermöglicht es, schwierige Geometrien bereits beim Spritzguss in die Gesamtform zu integrieren. Aus diesem Grund erfordert die Schmelzkerntechnik regelmäßig ein sehr fließfähiges Schmelzematerial. Fasergehalte, insbesondere hohe Fasergehalte, wie sie in Saugrohrmodulen gebraucht werden, beeinträchtigen die Viskosität der Kunststoffschmelze jedoch erheblich. Aus diesem Grunde lassen sich komplexe Saugrohrmodule, z.B. solche mit einem schmalen Anguss oder mit langen Fließwegen, mit der Schmelzkerntechnik nur bei sehr hohen Schmelzetemperaturen verwirklichen. Je höher die Temperatur der Kunststoffschmelze jedoch ist, desto länger ist die Abkühlzeit, bevor das Bauteil aus der Spritzgießform entnommen werden kann, was zwangsläufig zu langen Zykluszeiten führt.

Ein Kunststoffmaterial, das diesen Anforderungen gerecht wird, steht bislang nicht zur Verfügung.

Wünschenswert wäre demgemäß ein Kunststoffmaterial, das auch in Gegenwart hoher Glasfaseranteile bei weniger hohen Schmelzetemperaturen hinreichend viskos ist und eine schnelle und leichte Entformung zulässt. Insbesondere wäre es wünschenswert, ein Kunststoffmaterial einsetzen zu können, das sich gleichermaßen gut für die Schmelzkerntechnik wie auch für bekannte Schweißtechniken eignet.

Der vorliegenden Erfindung lag demgemäß die Aufgabe zugrunde, Formmassen zur Verfügung zu stellen, die bei der Herstellung von Kunststoffhohlkörpern universell einsetzbar sind, kurze Zykluszeiten ermöglichen und auch bei Dauerbelastung unter sehr hohen Temperaturen sehr gute mechanische Eigenschaften und insbesondere einen sehr hohen Berstdruck gewährleisten.

Demgemäß wurden thermoplastische Formmassen verwendet, die
(A) ein oder mehrere Polyamide,
(B) schlichtebehandelte faserförmige Füllstoffe,
(C) geradkettige gesättigte Carbonsäuresalze mit Kettenlängen (einschließlich des endständigen Carboxylkohlenstoffatoms) von mindestens 20, bevorzugt mindestens 24 C-Atomen und
(D) Alkalimetallhalogenide und Kupfer(I)-Verbindungen, sowie gegebenenfalls
(E) einen in Polyamid löslichen Farbstoff,
(F) Schlagzähmodifier und/oder
(G) weitere Zusatzstoffe
enthalten.

In einer bevorzugten Ausführungsform enthalten die thermoplastischen Formmassen
(A) 1 bis 99,889 Gew.-% an Polyamid,
(B) 0,1 bis 50 Gew.-% an schlichtebehandelten faserförmigen Füllstoffen,
(C) 0,01 bis 10 Gew.-% an geradkettigen gesättigten Carbonsäuresalzen mit Kettenlängen (einschließlich des endständigen Carboxylkohlenstoffatoms) von mindestens 20, bevorzugt mindestens 24 C-Atomen und
(D) 0,001 bis 7 Gew.-% an einer Mischung, enthaltend Alkalimetallhalogenide und Kupfer(I)-Halogenide, sowie
(E) 0 bis 3 Gew.-% an löslichem Farbstoff,
(F) 0 bis 35 Gew.-% an Schlagzähmodifiern und/oder
(G) 0 bis 30 Gew.-% an weiteren Zusatzstoffen,
wobei die Summe der Gew.-% stets 100 ergibt.

Die Erfindung betrifft somit die Verwendung dieser thermoplastischen Formmassen für die Herstellung von Kunststoffhohlkörpern, z.B. von Saugrohrmodulen.

Als Komponente A) enthalten die erfindungsgemäß zu Verwendenden thermoplastischen Formmassen mindestens ein Polyamid.

Geeignet sind Polyamide mit aliphatischem teilkristallinen oder teilaromatischen sowie amorphen Aufbau jeglicher Art und deren Blends, einschließlich Polyetheramide wie Polyetherblockamide. Unter Polyamide im Sinne der vorliegenden Erfindung sollen alle bekannten Polyamide verstanden werden.

Solche Polyamide weisen im allgemeinen eine Viskositätszahl von 90 bis 350, vorzugsweise 110 bis 240 ml/g auf, bestimmt in einer 0,5 gew.-%-igen Lösung in 96 gew.-%-iger Schwefelsäure bei 25°C gemäß ISO 307.

Halbkristalline oder amorphe Polyamidharze mit einem Molekulargewicht (Gewichtsmittelwert) von mindestens 5.000 g/mol, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure, Dodecandisäure (= Decandicarbonsäure) und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem Anteil von 5 bis 95 Gew.-% an Caprolactam-Einheiten.

PA 6, PA 66 und Copolyamide 6/66 sind besonders bevorzugt. Ganz besonders bevorzugt ist Polyamid 6 (PA 6).

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Die Herstellung der teilaromatischen Copolyamide mit niedrigem Triamingehalt kann nach den in den EP-A 129 195 und 129 196 beschriebenen Verfahren erfolgen.

Die nachfolgende nicht abschließende Aufzählung enthält die genannten, sowie weitere Polyamide im Sinne der Erfindung (in Klammern sind die Monomeren angegeben) :

| | |
|---|---|
| PA 46 | (Tetramethylendiamin, Adipinsäure) |
| PA 66 | (Hexamethylendiamin, Adipinsäure) |
| PA 69 | (Hexamethylendiamin, Azelainsäure) |
| PA 610 | (Hexamethylendiamin, Sebacinsäure) |
| PA 612 | (Hexamethylendiamin, Decandicarbonsäure) |
| PA 613 | (Hexamethylendiamin, Undecandicarbonsäure) |
| PA 1212 | (1,12-Dodecandiamin, Decandicarbonsäure) |
| PA 1313 | (1,13-Diaminotridecan, Undecandicarbonsäure) |
| PA MXD6 | (m-Xylylendiamin, Adipinsäure) |
| PA TMDT | (Trimethylhexamethylendiamin, Terephthalsäure) |
| PA 4 | (Pyrrolidon) |
| PA 6 | (ε-Caprolactam) |
| PA 7 | (Ethanolactam) |
| PA 8 | (Capryllactam) |
| PA 9 | (9-Aminopelargonsäure) |
| PA 11 | (11-Aminoundecansäure) |
| PA 12 | ((Laurinlactam) |

Diese Polyamide und ihre Herstellung sind bekannt. Einzelheiten zu ihrer Herstellung findet der Fachmann z.B. in Ullmanns Encyklopädie der Technischen Chemie, 4. Auflage, Bd. 19, S. 39-54, Verlag Chemie, Weinheim 1980, sowie Ullmanns Encyclopedia of Industrial Chemistry, Vol. A21, S. 179-206, VCH Verlag, Weinheim 1992, sowie Stoeckhert, Kunststofflexikon, 8. Auflage, S. 425-428, Hanser Verlag München 1992 (Stichwort "Polyamide" und folgende).

Auf die Herstellung der bevorzugten Polyamide PA6, PA 66 und Copolyamid 6/66 wird nachfolgend kurz eingegangen.

Die Polymerisation bzw. Polykondensation der Ausgangsmonomere wird vorzugsweise nach den üblichen Verfahren durchgeführt. So kann die Polymerisation des Caprolactams beispielsweise nach den in der DE-A 14 95 198 und DE-A 25 58 480 beschriebenen kontinuierlichen Verfahren erfolgen. Die Polymerisation von AH-Salz zur Herstellung von PA 66 kann nach dem üblichen diskontinuierlichen Verfahren (siehe: Polymerization Processes S. 424-467, insbesondere S. 444-446, Interscience, New York,1977) oder nach einem kontinuierlichen Verfahren, z.B. gemäß EP-A 129 196, erfolgen.

Bei der Polymerisation können übliche Kettenregler mitverwendet werden. Geeignete Kettenregler sind z.B. Triacetondiaminverbindungen (siehe WO-A 95/28443), Monocarbonsäuren wie Essigsäure, Propionsäure und Benzoesäure, sowie Basen wie Hexamethylendiamin, Benzylamin und 1,4-Cyclohexyldiamin. Auch C₄-C₁₀-Dicarbonsäuren wie Adipinsäure, Azelainsäure, Sebacinsäure, Dodecandisäure; C₅-C₈-Cycloalkandicarbonsäuren wie Cyclohexan-1,4-dicarbonsäure; Benzol- und Naphthalindicarbonsäuren wie Isophthalsäure, Terephthalsäure und Naphthalin-2,6-dicarbonsäure, sind als Kettenregler geeignet.

Die erhaltene Polymerschmelze wird aus dem Reaktor ausgetragen, gekühlt und granuliert. Das erhaltene Granulat wird einer Nachpolymerisation unterworfen. Dies geschieht in an sich bekannter Weise durch Erwärmen des Granulats auf eine Temperatur T unterhalb der Schmelztemperatur Tₛ bzw. Kristallitschmelztemperatur Tₖ des Polyamids. Durch die Nachpolymerisation stellt sich das endgültige Molekulargewicht des Polyamids (messbar als Viskositätszahl VZ, siehe Angaben zur VZ weiter oben) ein. Üblicherweise dauert die Nachpolymerisation 2 bis 24 Stunden , insbesondere 12 bis 24 Stunden. Wenn das gewünschte Molekulargewicht erreicht ist, wird das Granulat in üblicher Weise abgekühlt.

Entsprechende Polyamide sind unter dem Handelsnamen Ultramid® von BASF erhältlich. Selbstverständlich können auch beliebige Mischungen der vorgenannten Polyamidtypen als Komponente A) eingesetzt werden.

Die erfindungsgemäß zu verwendende thermoplastische Formmasse verfügt über schlichtebehandelte faserförmige Füllstoffe B). Die faserförmigen Füllstoffe liegen in den thermoplastischen Formmassen bevorzugt in Mengen von 0,1 bis 50, besonders bevorzugt 10 bis 45 und insbesondere 25 bis 40 Gew.-%, bezogen auf das Gesamtgewicht der thermoplastischen Formmassen, vor.

Als bevorzugte faserförmige Füllstoffe seien Glasfasern, Kohlenstoffasern, Aramid-Fasern, Kaliumtitanat-Fasern und Basalt-Fasern genannt, wobei Glasfasern aus E-Glas besonders bevorzugt sind. Diese können als Rovings oder Schnittglas in den handelsüblichen Formen eingesetzt werden.

Die faserförmigen Füllstoffe sind zur besseren Verträglichkeit mit dem Polyamid A) mit einer Schlichte vorbehandelt. Bevorzugte Schlichtebestandteile stellen Silanverbindungen dar.

Geeignete Silanverbindungen sind solche der allgemeinen Formel (I)

(X-(CH₂)ₙ)ₖ-Si-(O-CₘH₂ₘ₊₁)₄₋ₖ I

in der die Substituenten folgende Bedeutung haben:
- X: 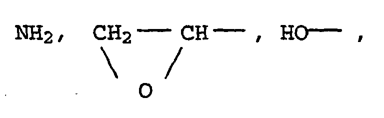
mit
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1.

Bevorzugte Silanverbindungen für die Anbindung der Glasfaser an Polyamide sind Aminosilanverbindungen wie Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf B)) zur Oberflächenbeschichtung eingesetzt.

Neben den Silanverbindungen enthält die Schlichte vorzugsweise auch Zusätze an polymeren Filmbildnern wie Polyurethanen. Bevorzugt liegt der Anteil an polymeren Filmbildnern im Bereich von 5 bis 15 Gew.-%, bezogen auf das Gesamtgewicht der Schlichte. Besonders bevorzugt verfügt die Schlichte über Kettenverlängerer. Als Kettenverlängerer kommen z.B. anorganische Verbindungen wie Hypophoshite, z.B. Alkali- oder Erdalkalihypophosphite wie Natrium- oder Magnesiumhypophospit, gegebenenfalls auch als Monohydrat, oder organische Verbindungen, die mit Polyamiden unter Kettenverlängerung reagieren können, in Frage. Unter solche organische Verbindungen fallen z.B. Verbindungen, die mindestens eine, bevorzugt mindestens zwei gegenüber Polyamiden reaktive funktionelle Gruppen wie die Epoxy-, Hydroxy-, Ester- und Carboxy- oder Maleinsäureanhydridgruppe alleine oder in Mischung enthalten. Hierunter fallen auch Verbindungen mit aciden H-Atomen, z.B. Polyethylenglykol-2-ethyl-alkylester. Des weiteren können der Schlichte auch oberflächenaktive Substanzen und/oder Antistatika zugesetzt sein.

Bevorzugt sind faserförmige Füllstoffe mit einer mittleren arithmetischen Faserlänge von 150 µm bis 10 mm, bevorzugt 200 µm bis 7 mm und insbesondere 220 µm bis 5 mm. Der mittlere Durchmesser beträgt im allgemeinen von 3 bis 30 µm, bevorzugt von 5 bis 20 µm und insbesondere 8 bis 14 µm. Die gewünschte Faserlänge kann z.B. durch Mahlen in einer Kugelmühle eingestellt werden, wobei eine Faserlängenverteilung entsteht.

Eine weitere Reduzierung der Faserlänge führt, wenn die mittlere Faserlänge <200 µm ist, zu einem rieselfähigen Schüttgut, das wie ein Pulver in das Polymer eingemischt werden kann. Aufgrund der geringen Faserlänge tritt beim Einarbeiten nur noch eine geringe weitere Verkürzung der Faserlänge ein.

Der Fasergehalt wird üblicherweise nach Veraschen des Polymeren bestimmt. Zur Bestimmung der Faserlängenverteilung wird im allgemeinen der Ascherückstand in Silikonöl aufgenommen und bei 20-facher Vergrößerung des Mikroskops fotografiert. Auf den Bildern können bei mindestens 500 Fasern die Länge ausgemessen und der arithmetische Mittelwert (d₅₀) daraus berechnet werden.

Exemplarisch seien als besonders geeignete schlichtebehandelte Glasfasern B) die Schnittglasfaser die Handelsprodukte Chop Vantage^{®} 3540, 3545, 3660 und 3786 der Fa. PPG Industries Inc. genannt.

Geeignet sind weiterhin nadelförmige mineralische Füllstoffe, unter welchen mineralische Füllstoffe mit stark ausgeprägtem nadelförmigen Charakter verstanden werden sollen. Als Beispiel sei nadelförmiger Wollastonit genannt. Vorzugsweise weist das Mineral ein L/D- (Länge/Durchmesser)-Verhältnis von 8 : 1 bis 35 : 1, bevorzugt von 8 : 1 bis 11 : 1 auf. Der mineralische Füllstoff ist ebenfalls mit der vorstehend genannten Schlichte vorbehandelt, es sei denn, gleichzeitig wird eine schlichtebehandelte Faser eingesetzt.

Als teilchenförmige Füllstoffe-eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Es können auch beliebige Faser- und/oder Füllstoffmischungen eingesetzt werden.

Als Komponente C) liegen in den erfindungsgemäß einsetzbaren Formmassen geradkettige gesättigte Carbonsäuresalze mit Kettenlängen (einschließlich des endständigen Carboxylkohlenstoffatoms) von mindestens 20 und bevorzugt mindestens 24 C-Atomen vor. Geeignete Mengen liegen im Bereich von 0,01 bis 10, bevorzugt 0,05 bis 1,5 und besonders bevorzugt 0,1 bis 0,5 Gew.-%, bezogen auf das Gesamtgewicht an thermoplastischer Formmasse. Besonders bevorzugt sind die Salze der Montansäure, wobei im Sinne der vorliegenden Erfindung unter Montansäure sowohl die Verbindung CH₃(CH₂)₂₆CO₂H wie auch ein Gemisch an geradkettigen gesättigten Fettsäuren mit 24 bis 32 Kohlenstoffatomen verstanden werden soll. Als kationische Gegenionen fungieren in den genannten Carbonsäuresalzen bevorzugt Alkali- und Erdalkalikationen, wie Lithium, Natrium oder Calcium. Selbstverständlich können auch das Aluminiumkation oder Übergangsmetallkationen wie Zink oder nicht-metallische Kationen wie Ammonium-, Phosphonium- oder Arseniumionen verwendet werden. Besonders geeignet sind die Kationen der Erdalkalimetalle, insbesondere das Calcium-Kation. Es können auch beliebige Mischungen der vorgenannten geradkettigen gesättigten Carbonsäuresalze eingesetzt werden. In einer besonders bevorzugten Ausführungsform kommt als Komponente C) Calcium-Montanat zum Einsatz. Solche Produkte sind im Handel z.B. unter dem Namen Licomont VaV 102 (Fa. Clariant) erhältlich.

Als Komponente D) liegt in den erfindungsgemäßen thermoplastischen Formmassen ein Gemisch an Kupfer(I)-Verbindungen und Alkalimetallhalogeniden vor. Geeignete Mengen dieses Gemisches liegen im Bereich von mindestens 0,05 Gew.-%, bevorzugt im Bereich von 0,05 bis 7, besonders bevorzugt von 0,3 bis 5 und insbesondere von 0,5 bis 3 Gew.-%, bezogen auf das Gesamtgewicht der thermoplastischen Formmasse. Kupfer(I)-Verbindungen werden vorteilhafterweise in Form von Kupfer(I)-Halogeniden in die thermoplastischen Formmassen eingebracht. Als bevorzugte Kupfer(I)-Halogenide kommen Kupfer(I)-Chlorid und Kupfer(I)-Bromid sowie insbesondere Kupfer(1)-Iodid oder deren Mischungen in Frage. Zusammen mit den Kupfer(I)-Verbindungen werden in der Komponente D) Alkalimetallhalogenide eingesetzt. Geeignet als Alkalimetallhalogenide sind die Fluoride, Chloride, Bromide und Iodide des Lithiums, Natriums, Kaliums und Cäsiums. Bevorzugt wird auf Kaliumiodid, insbesondere Kaliumbromid zurückgegriffen. Es können auch Mischungen an Alkalimetallhalogeniden eingesetzt werden. In der vorgehend beschriebenen Stabilisatormischung liegen die Alkalimetallhalogenide vorteilhafterweise im molaren Überschuss vor. Das molare Verhältnis von Alkalimetallhalogeniden zu Kupferhalogeniden liegt demgemäß vorzugsweise im Bereich von 10:1 bis 1:100 und besonders bevorzugt im Bereich von 1:1 bis 1:50. Als besonders geeignet haben sich thermoplastische Formmassen erwiesen, in denen Kupfer in Form einer Kupfer(I)-Verbindung in einer Menge von mindestens 10 ppm, bezogen auf das Gesamtgewicht der thermoplastischen Formmasse, vorliegt. Vorzugsweise liegt diese Kupfermenge im Bereich von 50 bis 1000 ppm, besonders bevorzugt im Bereich von 80 bis 500 ppm und insbesondere im Bereich von 250 bis 400 ppm.

Zusätzlich zu den Alkalimetallhalogeniden kann man in einer weiteren Ausführungsform auch Triphenylphosphin als Stabilisatorbestandteil mitverwenden.

Des weiteren können die erfindungsgemäß einsetzbaren thermoplastischen Formmassen als Komponente E) bis zu 5 Gew.-%, besonders bevorzugt bis zu 2 Gew.-%, bezogen auf das Gesamtgewicht der thermoplastischen Formmassen, an löslichem Farbstoff enthalten. Hierbei handelt es sich um solche Farbstoffe, die im Polyamid A) löslich sind. Geeignet als lösliche Farbstoffe sind z.B. organische Verbindungen enthaltend ein Chromophor, beispielsweise Aminfarbstoffe wie das Handelsprodukt Nigrosin.

Schlagzähmodifier (Komponente F)) können in den erfindungsgemäßen Formmassen in Mengen bis zu 35, vorzugsweise bis zu 25 Gew.-% enthalten sein. Schlagzähmodifier sind dem Fachmann auch unter den Bezeichnungen kautschukelastische Polymerisate, Elastomere oder Kautschuke bekannt.

Ganz allgemein handelt es sich dabei um (Co)polymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977), beschrieben.

Im folgenden werden einige bevorzugte Arten solcher Elastomerer vorgestellt.

Bevorzugte Arten von Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl-(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren M zum Monomerengemisch in den Kautschuk eingebaut.

Bevorzugte Dicarbonsäure- bzw. Epoxy-Monomere M sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/ oder Methacrylsäure und/oder Säureanhydridgruppen enthaltenden Monomeren sowie der restlichen Menge an (Meth)acrylsäureestern.

Weitere bevorzugte Ester der Acryl- und/oder Methacrylsäure sind die Methyl-, Ethyl-, Propyl- und i- bzw. t-Butylester. Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. in Blackley, Emulsion Polymerisation, Applied Science Publishers, London 1975, beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel (II) 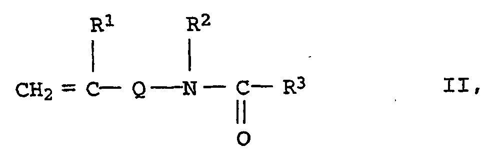 eingeführt werden könnnen,
wobei die Substituenten folgende Bedeutung haben:
- R¹: Wasserstoff oder eine C₁- bis C₄-Alkylgruppe,
- R²: Wasserstoff, eine C₁- bis C₈-Alkylgruppe oder eine Arylgruppe, insbesondere Phenyl,
- R³: Wasserstoff, eine C₁- bis C₁₀-Alkyl-, eine C₆- bis C₁₂-Arylgruppe oder -OR⁴
- R⁴: eine C₁- bis C₈-Alkyl- oder C₆- bis C₁₂-Arylgruppe, die gegebenenfalls mit O- oder N-haltigen Gruppen substituiert sein können,
- Q: eine chemische Bindung, eine C₁- bis C₁₀-Alkylen- oder C₆-C₁₂-Arylengruppe oder 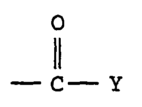
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente G) können die erfindungsgemäßen Formmassen bis zu 30 Gew.-%, vorzugsweise bis zu 15 Gew.-% weiterer Zusatzstoffe enthalten.

Als Beispiel seien in Mengen von 0 bis 2 Gew.-% fluorhaltige Ethylenpolymerisate genannt. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seiten 484 bis 494, und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung z.B. in eine Polyamidschmelze erzielen.

Als weitere Zusatzstoffe seien genannt Hitze- und Lichtstabilisatoren, Gleit- und Entformungsmittel, Färbemittel, wie nicht lösliche Farbstoffe und Pigmente in üblichen Mengen.

Zusätzliche Pigmente und nicht lösliche Farbstoffe sind allgemein in Mengen bis zu 2, bevorzugt bis 1 und insbesondere bis 0,5 Gew.-% in den thermoplastischen Formmassen enthalten. Derartige Pigmente führen beispielsweise zu einer Farbvertiefung oder zu unterschiedlichen matten Abstufungen der schwarzen Farbe und sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weisspigmente zu nennen wie Zinkoxid, Zinksulfid, Bleiweiss (PbCO₃·Pb(OH)₂), Lithopone, Antimonweiss und Titandioxid. Von den beiden gebräuchlichsten Kristallmodifikationen (Rutil- und Anatas-Typ) des Titandioxids wird insbesondere die Rutilform zur Nuancierung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu,(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace-oder Gasruß eingesetzt wird (siehe hierzu G. Benzing, Pigmente für Anstrichmittel, Expert-Verlag (1988), S. 78ff Oxidationsverzögerer und Wärmestabilisatoren, die den thermoplastischen Massen gemäß der Erfindung zugesetzt werden können, sind z.B. Zinkfluorid und Zinkchlorid. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, sog. HALS-Typen (hindered amine licht stabilizer) und Mischungen dieser Verbindungen, vorzugsweise in Konzentrationen bis zu 1 Gew.%, bezogen auf das Gewicht der Mischung, einsetzbar. Synergistische Komponenten wie Triphenylphosphin können ebenso Verwendung finden.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Als Antistatika seien beispielsweise Kokosfettdiethanolamin und Natriumalkylsulfonate genannt.

Gleit- und Entformungsmittel, die in der Regel in Mengen bis zu 1 Gew.% der thermoplastischen Masse zugesetzt werden, sind Stearinsäure, Stearylalkohol, Octadecylalkohol, Stearinsäurealkylester und -amide, Ethylenbisstearylamid sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Als Flammschutzmittel seien beispielsweise roter Phosphor, Phosphorverbindungen, Melamincyanurat, Erdalkalicarbonate, Magnesiumhydroxid oder halogenhaltige wie Decabromdiphenylethan genannt, welche in Mengen bis zu 20, vorzugsweise bis zu 15 Gew.-% eingesetzt werden können.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Auch niedermolekulare Polymere kommen als Zusatzstoffe in Betracht, wobei Polyethylenwachs als Gleitmittel besonders bevorzugt ist.
Als Zusatzstoffe kommen weiterhin anorganische und organische Kettenverlängerer wie Natriumhypophosphit (ggfs. als Monohydrat) oder Polymere mit gegenüber Polyamiden reaktiven Endgruppen wie Epoxy-, Hydroxy-, Ester- und Carboxy-Endgruppen sowieVerbindungen mit aciden H-Atomen, z.B. Polyethylenglykol-2-ethyl-alkylester, in Betracht.

Die Herstellung der erfindungsgemäß einsetzbaren Formmassen kann nach an sich bekannten Verfahren erfolgen. Beispielsweise können sämtliche Komponenten A) bis D) und gegebenenfalls E) bis G) trocken vermischt und anschließend aufgeschmolzen und in die erfindungsgemäßen thermoplastischen Formmassen überführt werden. Des weiteren können die mit der Schlichte versehenen Glasfasern bereits im eingesetzten Polyamidgranulat vorliegen. Nach einer bevorzugten Ausführungsform erfolgt die Herstellung durch Zugabe der Komponenten B) bis D) sowie gegebenenfalls E) bis G) zur Schmelze der Komponente A). Hierbei werden in einer bevorzugten Ausführungsform die Komponenten B) und gegebenenfalls F) getrennt zu der Schmelze der Komponente A) zudosiert. Die Komponenten C) und D) sowie gegebenenfalls E) und G) können getrennt oder vorzugsweise als Vormischung in die Schmelze eingebracht werden. Zweckmäßigerweise verwendet man hierzu Extruder, z.B. Einschnecken- oder Zweischnecken-Extruder oder andere herkömmliche Plastifizierungsvorrichtungen wie Brabender-Mühlen oder Banbury-Mühlen.

Die erhaltene Polyamidmischung kann man gegebenenfalls einer weiteren thermischen Behandlung, d.h. einer Nachkondensation in fester Form unterwerfen. In Temperaggregaten, z.B. einem Taumler-Mischer, oder kontinuierlich sowie diskontinuierlich betriebenen Temperrohren tempert man die in der jeweiligen Bearbeitungsform vorliegende Formmasse, bis die gewünschte Viskositätszahl VZ erreicht ist. Der Temperaturbereich für die Temperung hängt vom Schmelzpunkt der reinen Komponente A) ab. Bevorzugte Temperaturen für die Temperung liegen im Bereich von 5 bis 50, vorzugsweise 20 bis 30°C unterhalb des jeweiligen Schmelzpunktes von Komponente A). Das Temperverfahren erfolgt vorzugsweise unter einer Inertgasatmosphäre, vorzugsweise mit Stickstoff oder überhitztem Wasserdampf als Inertgasen. Die Verweilzeiten betragen im allgemeinen 0,5 bis 50, vorzugsweise 4 bis 20 Stunden.

Gegenstand der Erfindungsgemäßen Verwendung ist die Herstellung von Kunststoffhohlkörpern aus den erfindungsgemäßen Formmassen. Die Kunststoffhohlkörper können sowohl einstückig nach der Schmelzkerntechnik, als auch aus mehreren Kunststoffformkörpern mittels dem Fachmann bekannter Schweißtechniken wie dem Ultraschall-, Laser-, Heizelement- und dem Vibrationsschweißen gefertigt sein.

Die erfindungsgemäß einsetzbaren thermoplastischen Formmassen zeichnen sich durch eine sehr gute Fließfähigkeit aus. Die Schmelzestabilität ist unter üblichen Verarbeitungsbedingungen ausgezeichnet und weitgehend unabhängig von den gewählten Bedingungen. Mit diesen Formmassen lassen sich Kunststoffhohlkörper mit einer hervorragenden Oberfläche erhalten, die sich durch exzellente mechanische Eigenschaften, z.B. einen sehr hohen Berstdruck, der auch bei Dauerbelastung unter hohen Temperaturen nicht einbricht, auszeichnen.

Die mit den erfindungsgemäßen thermoplastischen Formmassen erhaltenen Kunststoffhohlkörper verfügen über sehr glatte Oberflächen, die nicht durch an der Oberfläche heraustretende Glasfaserenden beeinträchtigt werden. Ein auf solche Glasfaserenden zurückgehender Vergrauungseffekt wird nicht beobachtet. Aus den erfindungsgemäß eingesetzten thermoplastischen Formmassen hergestellte Kunststoffhohlkörper zeichnen sich durch eine stark verbesserte Schlagzähigkeit (bestimmt nach ISO179/1eU) sowie durch eine stark verbesserte Zugfestigkeit (bestimmt nach ISO 527-2) aus, und zwar sowohl vor, als auch nach einer Wärmelagerung, z.B. bei 150°C für einen Zeitraum von 1000 h im Umluftofen. Die erfindungsgemäß einsetzbaren Formmassen werden für die Herstellung von Kunststoffhohlkörpern, beispielsweise von Saugrohrmodulen verwendet. Diese Kunststoffhohlkörper, beispielsweise aus zwei Halbschalen vibrationsgeschweißte Kugelhohlkörper, zeichnen sich - ebenfalls vor wie auch nach der vorgehend beschriebenen Wärmelagerung - durch einen stark verbesserten Berstdruck aus. Verbesserungen im Bereich von 10 bis 20 % und auch darüber sind für die vorgenannten Parameter Schlagzähigkeit, Zugfestigkeit und Berstdruck ohne weiteres zu erreichen. Von Vorteil ist weiterhin, dass sich hoch belastbare Kunststoffhohlkörper bzw. Kunststoffbauteile erhalten lassen, unabhängig davon, ob sie nach der Schmelzkerntechnik oder mittels geeigneter Schweißverfahren erhalten werden. Beispielsweise erlauben es die erfindungsgemäßen Formmassen, über die Schmelzkerntechnik zu Hohlkörpern mit komplexer Geometrie, z.B. sehr schmalen Fließwegen oder sehr engen Angüssen, zu gelangen. Von Vorteil ist weiterhin, dass sich die spritzgegossenen Kunststoffformkörper bei sehr hohen Temperaturen entformen lassen, ohne beschädigt zu werden, und so sehr kurze Zykluszeiten ermöglichen. Aufgrund dieser sehr kurzen Zykluszeiten kommen die erfindungsgemäßen thermoplastischen Formmassen auch für einen sogenannten On-Line-Fertigungsprozess in Frage, d.h. der spritzgegossene Kunststoffform- oder Kunststoffhohlkörper wird nicht zwischengelagert, sondern direkt in den automatisierten Herstellprozess, beispielsweise eines Saugrohrmoduls, integriert.

### Beispiel 1:

| | |
|---|---|
| Komponente A): | Polycaprolactam mit einer relativen Lösungsviskosität RV (1,0 g/dl) von 2,73 |
| Komponente B) : | Schnittglasfaser PPG 3660 der Fa. PPG Fiber Glass |
| Komponente C): | Calciummontanat |
| Komponente D): | CuI/KI-Komplex (molares Verhältnis 1/5) |
| Komponente G) : | Rußpigment BP 880 |

64,147 Gew.-% A, 35 Gew.-% B, 0,35 Gew.-% C, 0,003 Gew.-% Cu in Form der Komponente D und 0,5 Gew.-% G, jeweils bezogen auf das Gesamtgewicht aller Komponenten, wurden in einem Zweischnecken-extruder ZSK 40 der Fa. Werner & Pfleiderer bei 275°C gemischt.

Das erhaltenen Granulat wurde gemäß ISO 179/1eU zu Probekörpern verarbeitet, an denen die Schlagzähigkeit bestimmt wurde. Der Mittelwert für die an 10 Probekörpern bestimmte Schlagzähigkeit betrug 109 kJ/m².

### Vergleichsbeispiel:

Wie in Beispiel 1 beschrieben wurden Probekörper hergestellt, wobei jedoch anstelle der in Beispiel 1 eingesetzten Komponente B eine Schnittglasfaser PPG 3545 der Fa. PPG Fiber Glass, und anstelle der in Beispiel 1 eingesetzten Komponente C Calciumstearat eingesetzt wurde. Der Mittelwert für die Schlagzähigkeit betrug 85 kJ/m².

## Patentansprüche

1. Verwendung thermoplastischer Formmassen, enthaltend
(A) ein oder mehrere Polyamide,
(B) schlichtebehandelte faserförmige Füllstoffe,
(C) geradkettige gesättigte Carbonsäuresalze mit Kettenlänge (einschließlich des endständigen Carboxylkohlenstoffatoms) von mindestens 20, bevorzugt mindestens 24 C-Atomen und
(D) Alkalimetallhalogenide und Kupfer(I)-Verbindungen sowie gegebenenfalls
(E) einen in Polyamid löslichen Farbstoff,
(F) Schlagzähmodifier und/oder
(G) weitere Zusatzstoffe
für die Herstellung von Kunststoffhohlkörpern, insbesondere Saugrohrmodulen, oder Bauteilen derselben.

## Claims

1. The use of thermoplastic molding compositions comprising
(A) one or more polyamides,
(B) fibrous fillers treated with size,
(C) straight-chain saturated carboxylic salts with chain lengths (including the terminal carboxy carbon atom) of at least 20, preferably at least 24, carbon atoms,
(D) alkali metal halide and copper(I) compounds, and also, if appropriate,
(E) a polyamide-soluble dye,
(F) impact modifier, and/or
(G) other additives
for producing hollow plastic articles, in particular inlet manifold modules or components of the same.

## Revendications

1. Utilisation de matériaux à mouler thermoplastiques, contenant :
(A) un ou plusieurs polyamides,
(B) des matières de charge fibreuses traitées par encollage,
(C) des sels d'acide carboxylique linéaires saturés ayant des longueurs de chaîne (l'atome de carbone carboxyle terminal inclus) d'au moins 20, de manière préférée d'au moins 24 atomes de C, et
(D) des halogénures de métal alcalin et des composés de cuivre (I), ainsi qu'éventuellement
(E) un colorant soluble dans le polyamide,
(F) un modificateur de la résistance aux chocs et/ou
(G) d'autres additifs
pour la fabrication de corps creux en matière plastique, en particulier des modules de tubes d'aspirateur, ou des éléments de ces mêmes modules.
